# FASCICULE DE BREVET EUROPEEN

(11) **EP 2 815 140 B1**
(45) Date de publication et mention de la délivrance du brevet: **12.04.2017**
(21) Numéro de dépôt: 13702654.8
(22) Date de dépôt: 07.02.2013
(51) Int. Cl.: F16C 32/04, F16C 27/04, F16C 39/02, F16C 19/54, F16C 35/073, F16C 35/06

(54) **ENSEMBLE DE ROULEMENTS ET MACHINE TOURNANTE CORRESPONDANTE**
WÄLZLAGERVORRICHTUNG UND ENTSPRECHENDE ROTIERENDE MASCHINE
ROLLING BEARING ASSEMBLY AND CORRESPONDING ROTARY MACHINE

(30) Priorité: 13.02.2012 FR 1251308
(43) Date de publication de la demande: 24.12.2014
(73) Titulaire: GE Energy Power Conversion Technology Limited, Rugby Warwickshire CV21 1BU (GB)
(72) Inventeur: DELEPINE, Xavier, 54360 Vigneulles (FR); LACOUR, Yves, 5400 Nancy (FR)
(74) Mandataire: Serjeants LLP
(86) Numéro de dépôt international: PCT/EP2013/052396
(87) Numéro de publication internationale: WO 2013/120755

(56) Documents cités:
- EP-A1- 0 499 310
- JP-A- 2011 001 972
- US-A1- 2004 189 124
- US-A1- 2011 085 753

## Description

L'invention concerne un ensemble de roulements étant un palier atterrisseur pour une machine tournante selon le préambule de la revendication 1. L'ensemble comprenant :
- un premier roulement à contact oblique ayant une première bague extérieure, une première bague intérieure et des premiers éléments roulants ;
- un deuxième roulement à contact oblique ayant une deuxième bague extérieure, une deuxième bague intérieure et des deuxièmes éléments roulants ;
- un support dans lequel sont montés le premier roulement à contact oblique et le deuxième roulement à contact oblique.

On connaît de tels ensembles de roulements. Ces ensembles sont par exemple fixés dans un moteur asynchrone dont le rotor est logé par des paliers principaux qui sont des paliers magnétiques.

Les ensembles de roulements constituent des paliers secondaires, aussi appelés paliers atterrisseurs, supportant l'arbre lors d'une défaillance du palier principal.

Les ensembles de roulements connus de l'état de la technique comprennent un organe de fixation axial des deux bagues extérieures dans le support qui exerce une précharge axiale sur les bagues extérieures et qui est relativement souple.

De plus, les deux bagues extérieures sont disposées dans le support en définissant un jeu axial entre elles.

Un organe d'amortissement est disposé directement autour des deux bagues extérieures.

Les roulements sont des roulements à éléments roulants en céramique.

L'ensemble de roulements connu implique les inconvénients suivants.

Lors de la sollicitation radiale de l'ensemble de roulements par l'arbre du rotor, la disposition coaxiale des deux roulements n'est pas assurée en raison du jeu axial présent entre les deux bagues extérieures, en raison du contact direct des bagues extérieures avec l'organe d'amortissement et en raison de la précharge axiale relativement faible.

L'amortissement du déplacement radial de l'arbre par l'organe d'amortissement n'est pas possible sans déplacement radial des roulements l'un par rapport à l'autre dans le support. Le rotulage, c'est-à-dire un déplacement de l'arbre autour d'un axe perpendiculaire à son axe de rotation, de l'arbre déplace les roulements l'un par rapport à l'autre.

La concentricité des bagues n'est donc pas assurée.

Etant donné que les roulements sont des roulements à contact oblique, la sollicitation radiale se traduit en une force de réaction axiale qui agit à l'encontre de la force de précharge. La précharge n'est donc pas définie dans ce cas.

Le document JP 2011 001972 divulgue un ensemble de roulement selon le préambule de la revendication 1.

L'invention a pour but de pallier à au moins un de ces inconvénients et de proposer un ensemble de roulements qui permette un fonctionnement fiable de l'ensemble lors de l'utilisation en tant que palier secondaire.

A cet effet, l'invention a pour objet un ensemble de roulements selon la revendication 1.

Selon des modes particuliers de réalisation, l'ensemble comporte l'une ou plusieurs des caractéristiques suivantes :
- la première bague extérieure est en contact avec la deuxième bague extérieure ;
- la première bague intérieure est en contact avec la deuxième bague intérieure ;
- les première et deuxième bagues extérieures comprennent chacune une piste de roulement définie par une piste partielle cylindrique et une piste partielle en forme de tore partiel ;
- un amortisseur disposé autour du support, l'amortisseur ayant une raideur radiale inférieure à celle des premier et deuxième roulements à contact oblique ;
- l'amortisseur est une feuille ondulée, notamment en tôle, les ondulations étant soit circonférentielles soit axiales ;
- un boîtier, le support est disposé dans le boîtier, notamment soit le support est en contact avec le boîtier, soit, le cas échéant, l'amortisseur est en contact avec le support et le boîtier.

L'invention a également pour objet un moteur électrique comprenant un arbre, un palier principal, notamment un palier magnétique, et un ensemble de roulements, caractérisé en ce que l'ensemble de roulements est un ensemble tel que décrit ci-dessus, l'ensemble de roulement forme un palier secondaire, le palier secondaire supportant l'arbre lorsque le palier principal associé est défaillant, et que l'arbre est monté sur le palier principal hors contact du palier secondaire.

L'invention sera mieux comprise à la lecture de la description qui va suivre, donnée uniquement à titre d'exemple et faite en se référant aux dessins annexés, sur lesquels :
- la figure 1 est une vue schématique en coupe axiale d'un moteur selon l'invention ;
- la figure 2 est une vue à plus grande échelle du détail II de la figure 1, et
- la figure 3 est une vue en coupe axiale selon la ligne III-III de la figure 2.

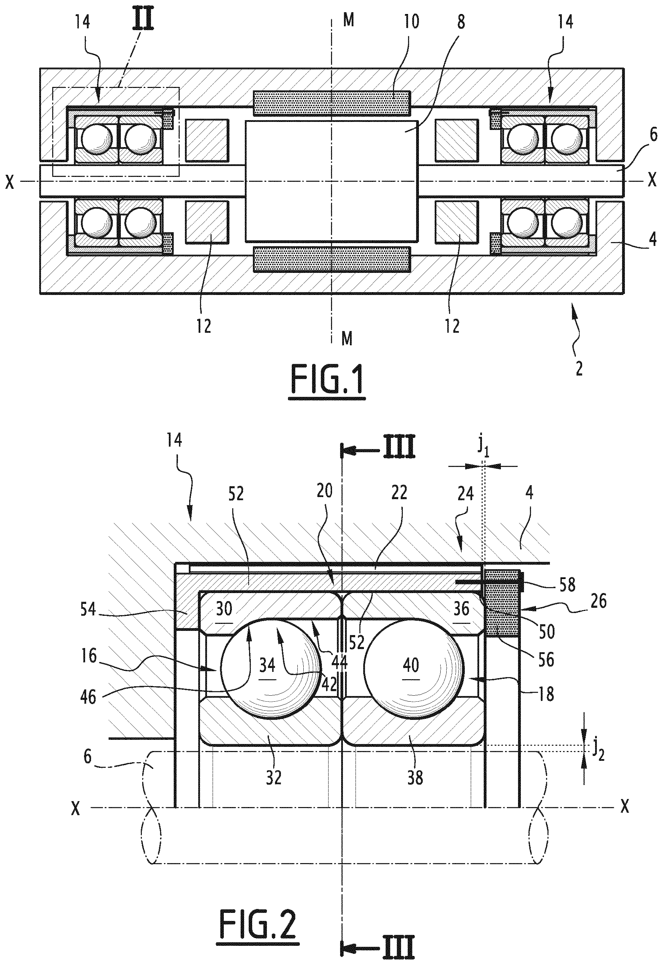

La figure 1 montre un moteur électrique selon l'invention, désigné par la référence générale 2.

Le moteur électrique 2 est par exemple un moteur asynchrone. Le moteur 2 est par exemple un moteur dont la vitesse nominale est supérieure à 6000 tours/min. De préférence la vitesse nominale est supérieure à 8000 tours/min.

Le moteur électrique 2 comprend un boîtier 4 ou carcasse, un arbre 6, un rotor 8 et un stator 10.

Le moteur électrique 2 définit un axe principal X-X qui est l'axe de rotation de l'arbre 6 et du rotor 8. Dans ce qui suit, les expressions « axialement », « radialement », et « circonférentiellement » seront utilisées par rapport à l'axe principal. Les axes propres des éléments décrits ci-après sont considérés coaxiaux à l'axe principal, sauf indication contraire. Le moteur 2 définit également un plan médian M-M s'étendant perpendiculairement à l'axe principal X-X. Le plan médian M-M est disposé au centre axial du rotor 8.

L'arbre 6 et le rotor 8 pris ensemble ont une masse qui est supérieure à 500 kg et notamment supérieure à 750 kg.

Le moteur électrique 2 comprend en outre deux paliers principaux 12 adaptés pour supporter en rotation l'arbre 6 et donc le rotor 8. En l'occurrence, les paliers principaux 12 sont des paliers magnétiques, de préférence des paliers actifs comprenant deux centreurs. Les deux paliers principaux 12 sont disposés axialement d'un côté et de l'autre du rotor 8.

Le moteur électrique 2 comprend également deux ensembles de roulement 14.

Chaque ensemble de roulement 14 est un palier secondaire ou palier atterrisseur adapté pour supporter l'arbre 6 lors d'une défaillance du palier principal 12 associé.

Dans le cas représenté, les deux ensembles de roulement 14 sont identiques et sont disposés dans le boîtier 4 selon un agencement sensiblement symétrique par rapport au plan médian M-M.

En variante non représentée, les deux ensembles de roulement 14 sont disposés selon un agencement asymétrique par rapport au plan médian M-M. De plus, les roulements d'un ensemble de roulement 14 peuvent avoir des tailles différentes par rapport aux roulements de l'autre des ensembles de roulement 14.

Par la suite, uniquement un seul des ensembles de roulement 14 sera décrit en se référant à la figure 2.

L'ensemble de roulement 14 comprend un premier roulement à contact oblique 16, un deuxième roulement à contact oblique 18, un support 20, un amortisseur 22, une portion 24 du boîtier 4, et des moyens de serrage axial 26.

Les deux roulements à contact oblique 16, 18 sont montés en X.

Le premier roulement à contact oblique 16 comprend une première bague extérieure 30, une première bague intérieure 32 et des premiers éléments roulants 34. En l'occurrence, les premiers éléments roulants 34 sont des billes. Les premiers éléments roulants 34 sont par exemple en métal, notamment en acier. En variante, les premiers éléments roulants 34 sont en céramique.

Le deuxième roulement à contact oblique 18 comporte une deuxième bague extérieure 36, une deuxième bague intérieure 38 et des deuxièmes éléments roulants 40. En l'occurrence, les deuxièmes éléments roulants 40 sont des billes. Les deuxièmes éléments roulants 40 sont par exemple en métal, notamment en acier. En variante, les deuxièmes éléments roulants 40 sont en céramique.

Dans le cas présent, la première bague extérieure 30 et la deuxième bague extérieure 36 comportent chacune une piste de roulement extérieure 42 formée par une piste partielle cylindrique 44 et une piste partielle en forme de tore partiel 46. Le profil de la piste partielle cylindrique 44 se joint d'une manière continue au profil de la piste partielle en forme de tore partiel 46. De plus, les deux pistes partielles cylindriques 44 des deux bagues extérieures 30, 36 sont adjacentes l'une de l'autre. Les deux pistes de roulement 42 de la première bague extérieure 30 et de la deuxième bague extérieure 36 sont donc axialement ouvertes d'un seul côté, de telle sorte qu'en l'absence de contraintes extérieures, les bagues extérieures 30, 36 peuvent être retirées axialement des éléments roulants associés.

La première bague intérieure 32 et la deuxième bague intérieure 38 comportent chacune une piste de roulement intérieure qui est exclusivement en forme de tore partiel et qui est axialement fermée des deux côtés.

La première bague extérieure 30 et la deuxième bague extérieure 36 sont disposées dans le support 20 directement l'une à côté de l'autre. La première bague extérieure 30 et la deuxième bague extérieure 36 sont en contact l'une de l'autre.

De préférence, le premier roulement à contact oblique 16 et le deuxième roulement à contact oblique 18 sont identiques. La seule différence est leur disposition symétrique l'un par rapport à l'autre.

Le support 20 comprend un évidement 50 de réception des roulements. Le support 20 est formé par une paroi cylindrique 52 et par une paroi de fond 54 annulaire. Ainsi, l'évidement 50 est formé par la surface intérieure de la paroi cylindrique 52 et par la surface intérieure de la paroi de fond 54.

La première bague extérieure 30 est en contact avec la paroi de fond 54 et avec la paroi cylindrique 52, tandis que la deuxième bague extérieure 36 est en contact avec la paroi cylindrique 52 mais non pas avec la paroi de fond 54.

La première bague intérieure 32 est en contact direct avec la deuxième bague intérieure 38.

Le premier roulement à contact oblique 16 et le deuxième roulement à contact oblique 18 sont montés dans le support 20. Les moyens de serrage axial 26 sont adaptés pour serrer les première et deuxième bagues extérieures 30, 36 axialement contre le support 20, plus précisément vers la paroi de fond 54.

La raideur axiale des moyens de serrage 26 sous une force axiale appliquée par la deuxième bague extérieure 36 est identique ou inférieure à la raideur des deux bagues extérieures 30, 36 sous cette même force. En d'autres termes, les moyens de serrage axial 26 se déforment plus axialement que les deux bagues extérieures 30, 36.

La raideur axiale des moyens de serrage 26 est largement inférieure à la raideur des deux bagues extérieures (facteur 10 ou plus).

La raideur axiale des moyens de serrage est très importante. Par exemple, la raideur axiale est supérieure à la raideur axiale des systèmes actuels utilisant une lame flexible.

L'opération de serrage sert à mettre en contact les bagues extérieures 30, 36 qui sont écartées initialement, donc avant le serrage, d'au moins 1/100 de mm et de préférence de quelques centièmes de mm. L'écart initial est une donnée de construction du fabricant de roulement.

Les moyens de serrage axial 26 sont par exemple constitués d'une plaque annulaire 56 et des moyens de fixation 58 fixant la plaque annulaire 56 au support 20.

Les moyens de fixation 58 sont par exemple des vis.

La raideur axiale des moyens de fixation 58 est inférieure à la raideur axiale de l'ensemble des deux bagues extérieures 30, 36 et de la plaque annulaire 56. Ainsi, sous un effort axial appliqué par la bague extérieure 36 sur la plaque annulaire 56, ce sont les moyens de fixation 58 qui absorbent les forces. Sous un tel effort axial, les moyens de fixation 58 se déforment axialement plus que la plaque annulaire 56.

En particulier, lors d'une dilatation thermique des roulements 16, 18 les moyens de fixation 58 confèrent un degré de liberté axial aux bagues 30, 36.

En variante non représentée, les moyens de fixation 58 sont une soudure, de telle sorte que la plaque 56 est soudée sur le support 20.

En variante non représentée encore, la plaque annulaire 56 a un diamètre extérieur qui correspond au diamètre intérieur de la paroi cylindrique 52, la plaque annulaire 56 ayant un filetage qui coopère avec un taraudage ménagé dans la paroi cylindrique 52.

En plus, un ressort axial ou plusieurs ressorts axiaux, tel qu'une rondelle Belleville ou des ressorts hélicoïdaux, peut être disposé ou peuvent être disposés entre la plaque annulaire 56 et la bague extérieure 36.

Eventuellement, chaque ressort axial est dans ce cas logé dans une cavité axiale qui est ménagée dans la plaque annulaire 56 et qui est ouverte vers la bague extérieure 36.

Lorsque les moyens de fixation 58, à l'état serré, sollicitent la plaque annulaire 56 vers ou contre la bague extérieure 36, un jeu axial j₁ existe entre la plaque annulaire 56 et le support 20. Ce jeu axial j₁ est non nul.

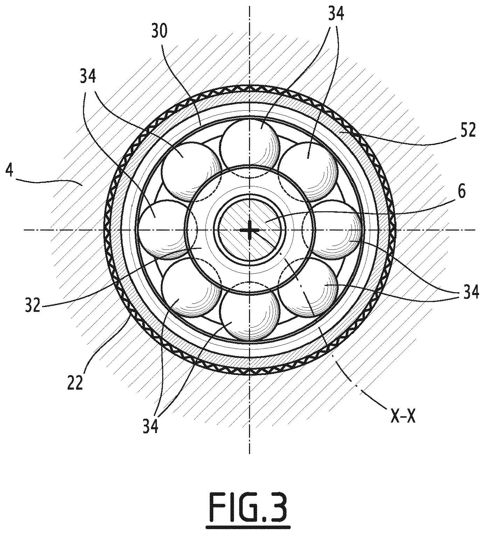

L'amortisseur 22 est disposé autour du support 20. L'amortisseur 22 a une raideur radiale inférieure à la raideur radiale des roulements à contact oblique 16, 18. En l'occurrence, l'amortisseur 22 est une feuille ondulée. Les ondulations de la feuille s'étendent circonférentiellement, comme ceci est visible sur la figure 3.

En variante non représentée, les ondulations s'étendent axialement.

La feuille ondulée est par exemple fabriquée en tôle.

L'amortisseur 22 est directement en contact avec le support 20 et avec le boîtier 4.

En variante, l'amortisseur 22 est omis et le support 20 est directement en contact avec le boîtier 4.

Le moteur électrique 2 fonctionne de la manière suivante.

Lorsque l'arbre 6 est monté sur les paliers principaux et lorsque les paliers principaux 12 supportent l'arbre 6, l'arbre 6 et les première et deuxième bagues intérieures 32, 38 définissent un jeu radial i₂. L'arbre 6 est hors contact des ensembles de roulements 14 et donc hors contact des bagues intérieures 32, 38.

Lorsque l'un ou les deux paliers principaux 12 sont défaillants, notamment pendant que le rotor 8 tourne, l'arbre 6 vient en contact des bagues intérieures 32, 38 de l'ensemble de roulement associé. Le rotor 8 et l'arbre 6 sont dorénavant portés par les roulements 16, 18.

Grâce à la disposition directement l'une à côté de l'autre de la première bague extérieure 30 et de la deuxième bague extérieure 36, la distribution des forces axiale et radiale appliquées aux roulements lors de l'entrée en contact avec l'arbre 6 est améliorée. De plus, grâce au montage des roulements à contact oblique 16, 18 directement dans le support assure un maintien axialement aligné des deux roulements 16, 18 l'un de l'autre. Le rotulage du support 20 autour d'un axe perpendiculaire à l'axe X-X conduit à un rotulage défini des deux roulements 16, 18.

De plus, le fait de disposer l'amortisseur 22 autour du support 20 rend l'assemblage des deux roulements dans le support facile.

L'application directe de la première bague extérieure 30 et de la deuxième bague extérieure 36 sur la paroi 52 facilite également l'assemblage.

La disposition de l'amortisseur 22 autour du support 20 contribue également à un assemblage facile et garantit que le premier roulement à contact oblique 16 et le deuxième roulement à contact oblique 18 restent coaxiaux lors d'un contact avec l'arbre 6.

L'invention peut s'appliquer généralement aux machines tournantes, par exemple des machines électriques tournantes, telles que des générateurs ou moteurs. En variante la machine tournante peut être un compresseur.

## Revendications

1. Ensemble de roulements (14) étant un palier atterrisseur pour une machine tournante, l'ensemble étant du type comprenant :
- un premier roulement à contact oblique (16) ayant une première bague extérieure (30), une première bague intérieure (32) et des premiers éléments roulants (34),
- un deuxième roulement à contact oblique (18) ayant une deuxième bague extérieure (36), une deuxième bague intérieure (38) et des deuxièmes éléments roulants (40),
- un support (20) dans lequel sont montés le premier roulement à contact oblique et le deuxième roulement à contact oblique, et
- des moyens de serrage axial (26) serrant les première et deuxième bagues extérieures (30, 36) axialement vers le support,
dans lequel :
- la première bague extérieure et la deuxième bague extérieure sont disposées dans le support directement l'une à côté de l'autre ; et
- les moyens de serrage axial (26) comprennent des moyens de fixation (58) et une plaque annulaire (56),
**caractérisé en ce que** :
- la raideur axiale des moyens de serrage sous une force axiale appliquée par la deuxième bague extérieure (36) est identique ou inférieure à la raideur des deux bagues extérieures (30, 36) sous cette force axiale ; et
- la raideur axiale des moyens de fixation (58) est inférieure, notamment d'un facteur 10 ou plus, à la raideur axiale des deux bagues extérieures (30, 36) et de la plaque annulaire (56).

2. Ensemble de roulements selon la revendication 1, **caractérisé en ce que** la première bague extérieure (30) est en contact avec la deuxième bague extérieure (36).

3. Ensemble de roulements selon la revendication 1 ou 2, **caractérisé en ce que** la première bague intérieure (32) est en contact avec la deuxième bague intérieure (38).

4. Ensemble de roulements selon les revendications 1 à 3, **caractérisé en ce que** les première et deuxième bagues extérieures comprennent chacune une piste de roulement (42) définie par une piste partielle cylindrique (44) et une piste partielle en forme de tore partiel (46).

5. Ensemble de roulements selon l'une quelconque des revendications 1 à 4, **caractérisé en ce qu'**il comprend un amortisseur (22) disposé autour du support, l'amortisseur ayant une raideur radiale inférieure à celle des premier et deuxième roulements à contact oblique (16, 18).

6. Ensemble de roulements selon la revendication 5, **caractérisé en ce que** l'amortisseur est une feuille ondulée, notamment en tôle, les ondulations étant soit circonférentielles soit axiales.

7. Ensemble selon l'une quelconque des revendications 1 à 6 **caractérisé en ce que** l'ensemble comprend un boîtier (4), et **en ce que** le support (20) est disposé dans le boîtier (4), notamment soit le support est en contact avec le boîtier, soit, le cas échéant, l'amortisseur est en contact avec le support et le boîtier.

8. Machine tournante, notamment électrique, en particulier moteur électrique (2), comprenant un arbre (6), un palier principal (12), notamment un palier magnétique, et un ensemble de roulements (14), **caractérisé en ce que** l'ensemble de roulements est un ensemble selon l'une quelconque des revendications précédentes, **en ce que** l'ensemble de roulement forme un palier secondaire, le palier secondaire supportant l'arbre lorsque le palier principal associé est défaillant, et **en ce que** l'arbre (6) est monté sur le palier principal hors contact du palier secondaire.

## Patentansprüche

1. Wälzlagerbaugruppe (14), die ein Notauffanglager für eine Rotationsmaschine ist, wobei die Baugruppe von einer Bauart ist, die aufweist:
- ein erstes Schrägwälzlager (16), das einen ersten Außenring (30), einen ersten Innenring (32) und erste Wälzkörper (34) aufweist,
- ein zweites Schrägwälzlager (18), das einen zweiten Außenring (36), einen zweiten Innenring (38) und zweite Wälzkörper (40) aufweist,
- einen Träger (20), in dem das erste Schrägwälzlager und das zweite Schrägwälzlager montiert sind, und
- axiale Spannmittel (26), die den ersten und zweiten Außenring (30, 36) in Axialrichtung gegen den Träger spannen, wobei:
- der erste Außenring und der zweite Außenring in dem Träger unmittelbar nebeneinander angeordnet sind; und
- die axialen Spannmittel (26) Befestigungsmittel (58) und eine ringförmige Platte (56) aufweisen,
**dadurch gekennzeichnet, dass**:
- die axiale Steifheit der Spannmittel unter einer axialen Kraft, die durch das zweite Außenlager (56) ausgeübt wird, gleich oder geringer ist als die Steifheit der beiden Außenringe (30, 36) unter dieser Axialkraft; und
- die axiale Steifheit der Befestigungsmittel (58) kleiner, insbesondere um einen Faktor von 10 oder mehr, geringer als die axiale Steifheit der beiden Außenringe (30, 36) und der ringförmigen Platte (56) ist.

2. Wälzlagerbaugruppe nach Anspruch 1, **dadurch gekennzeichnet, dass** der erste Außenring (30) mit dem zweiten Außenring (36) in Kontakt steht.

3. Wälzlagerbaugruppe nach Anspruch 1 oder 2, **dadurch gekennzeichnet, dass** das erste Innenlager (32) mit dem zweiten Innenlager (38) in Kontakt steht.

4. Wälzlagerbaugruppe nach den Ansprüchen 1 bis 3, **dadurch gekennzeichnet, dass** der erste und der zweite Außenring jeweils eine Laufbahn (42) aufweisen, die durch eine zylindrische Teilbahn (44) und eine Teilbahn in Form eines Teiltorus (46) definiert ist.

5. Wälzlagerbaugruppe nach einem beliebigen der Ansprüche 1 bis 4, **dadurch gekennzeichnet, dass** sie ein Dämpfungsglied (22) aufweist, das um den Träger herum angeordnet ist, wobei das Dämpfungsglied eine radiale Steifheit aufweist, die geringer ist als diejenige des ersten und des zweiten Schrägwälzlagers (16, 18).

6. Wälzlagerbaugruppe nach Anspruch 5, **dadurch gekennzeichnet, dass** das Dämpfungsglied eine Wellplatte, insbesondere aus Blech, ist, wobei die Wellen entweder in Umfangsrichtung oder in Axialrichtung verlaufen.

7. Baugruppe nach einem beliebigen der Ansprüche 1 bis 6, **dadurch gekennzeichnet, dass** die Baugruppe ein Gehäuse (4) aufweist und dass der Träger (20) in dem Gehäuse (4) angeordnet ist, wobei insbesondere entweder der Träger mit dem Gehäuse in Kontakt steht oder gegebenenfalls das Dämpfungsglied mit dem Träger und dem Gehäuse in Kontakt steht.

8. Rotationsmaschine, insbesondere elektrische, insbesondere Elektromotor (2), die eine Welle (6), ein Hauptlager (12), insbesondere ein Magnetlager, und eine Wälzlagerbaugruppe (14) aufweist, **dadurch gekennzeichnet, dass** die Wälzlagerbaugruppe eine Baugruppe nach einem beliebigen der vorhergehenden Ansprüche ist, dass die Wälzlagerbaugruppe ein sekundäres Lager bildet, wobei das sekundäre Lager die Welle lagert, wenn das zugehörige Hauptlager defekt ist, und dass die Welle (6) an dem Hauptlager ohne Kontakt mit dem sekundären Lager montiert ist.

## Claims

1. Roller bearing assembly (14), being an undercarriage bearing for a rotary machine, the assembly being of the type comprising:
- a first oblique contact roller bearing (16) with a first outer race (30), a first inner race (32) and first rolling elements (34),
- a second oblique contact roller bearing (18) with a second outer race (36), a second inner race (38) and second rolling elements (40),
- a support (20) in which the first oblique contact roller bearing and the second oblique contact roller bearing are mounted, and
- axial clamping means (26) clamping the first and second outer races (30, 36) axially towards the support,
wherein:
- the first outer race and the second outer race are arranged in the support directly next to each other; and
- the axial clamping means (26) comprise fixing means (58) and an annular plate (56),
**characterized in that**
- the axial stiffness of the clamping means under an axial force applied by the second outer race (36) is equal to or less than the stiffness of the two outer races (30, 36) under this axial force; and
- the axial stiffness of the fixing means (58) is less than, in particular by a factor of 10 or more, the axial stiffness of the two outer races (30, 36) and the annular plate (56).

2. Roller bearing assembly according to claim 1, **characterized in that** the first outer race (30) is in contct with the second outer race (36).

3. Roller bearing assembly according to claim 1 or 2, **characterized in that** the first inner race (32) is in contact with the second inner race (38).

4. Roller bearing assembly according to claims 1 to 3, **characterized in that** the first and second outer races each comprise a roller track (42) defined by a partial cylindrical track (44) and a partial track in the form of a partial torus.

5. Roller bearing assembly according to any of claims 1 to 4, **characterized in that** it comprises a damper (22) arranged around the support, the damper having a radial stiffness which is less than that of the first and second oblique contact roller bearings (16, 18).

6. Roller bearing assembly according to claim 5, **characterized in that** the damper is an undulated sheet, in particular made of metal, the undulations being either concentric or axial.

7. Roller bearing assembly according to any of claims 1 to 6, **characterized in that** the assembly comprises a housing (4) and **in that** the support (20) is arranged in the housing (4), in particular either the support is in contact with the housing, or where applicable the damper is in contact with the support and the housing.

8. Rotary machine, in particular electric, in particular an electric motor (2), comprising a shaft (6), a main bearing (12), in particular a magnetic bearing, and a roller bearing assembly (14), **characterized in that** the roller bearing assembly is an assembly according to any of the preceding claims, **in that** the roller bearing assembly forms a secondary bearing, the secondary bearing supporting the shaft when the associated main bearing fails, and **in that** the shaft (6) is mounted on the main bearing out of contact with the secondary bearing.
